# EUROPÄISCHE PATENTSCHRIFT

(11) **EP 2 510 026 B1**
(45) Veröffentlichungstag und Bekanntmachung des Hinweises auf die Patenterteilung: **26.02.2014**
(21) Anmeldenummer: 10790749.5
(22) Anmeldetag: 06.12.2010
(51) Int. Cl.: C08G 18/00, C08J 9/00, C08G 18/32, C08J 9/28

(54) **VERBESSERTE PORÖSE MATERIALIEN AUF BASIS VON AROMATISCHEN AMINEN**
IMPROVED POROUS MATERIALS BASED ON AROMATIC AMINES
MATÉRIAUX POREUX AMÉLIORÉS À BASE D'AMINES AROMATIQUES

(30) Priorität: 11.12.2009 EP 09178783
(43) Veröffentlichungstag der Anmeldung: 17.10.2012
(73) Patentinhaber: BASF SE, 67056 Ludwigshafen (DE)
(72) Erfinder: FRICKE, Marc, 49090 Osnabrück (DE); ELBING, Mark, 28857 Syke (DE)
(86) Internationale Anmeldenummer: PCT/EP2010/068962
(87) Internationale Veröffentlichungsnummer: WO 2011/069959

(56) Entgegenhaltungen:
- EP-A1- 0 288 067
- WO-A1-95/02009
- WO-A1-2008/138978

## Beschreibung

Die Erfindung betrifft ein poröses Material enthaltend folgende Komponenten in umgesetzter Form:
(a1) eine Isocyanatkomponente umfassend mindestens ein mehrfunktionelles Isocyanat, und
(a2) eine Aminkomponente umfassend mindestens ein mehrfunktionelles substituiertes aromatisches Amin (a2-s) gemäß der allgemeinen Formel I 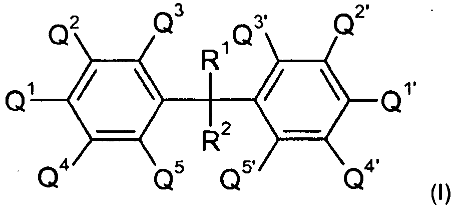 und optional mindestens ein weiteres mehrfunktionelles Amin, welches sich von den Aminen (a2-s) gemäß der allgemeinen Formel I unterscheidet, ausgewählt aus der Gruppe bestehend aus mehrfunktionellen aliphatischen Aminen (a2-a) und mehrfunktionellen aromatischen Aminen (a2-u),
   wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sein können und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass
   - die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist und
   - Q², Q⁴, Q^{2'} und Q^{4'} so gewählt werden, dass die Verbindung gemäß der allgemeinen Formel I mindestens eine lineare oder verzweigte Alkylgruppe, die optional weitere funktionelle Gruppen tragen kann, mit von 1 bis 12 Kohlenstoffatomen in α-Position zu mindestens einer an den aromatischen Kern gebundenen primären Aminogruppe aufweist.

Weiterhin betrifft die Erfindung ein Verfahren zur Herstellung von porösen Materialien, die so erhältlichen porösen Materialien sowie die Verwendung der porösen Materialien als Dämmstoff und in Vakuumisolationspaneelen.

Poröse Materialien, beispielsweise Polymerschäume, mit Poren im Größenbereich von wenigen Mikrometern oder deutlich darunter und einer hohen Porosität von mindestens 70 % sind aufgrund theoretischer Überlegungen besonders gute Wärmeisolatoren.

Solche porösen Materialien mit kleinem mittlerem Porendurchmesser können beispielsweise als organische Xerogele vorliegen. In der Literatur wird der Begriff Xerogel nicht durchweg einheitlich verwendet. Im Allgemeinen wird unter einem Xerogel ein poröses Material verstanden, welches durch ein Sol-Gel-Verfahren hergestellt wurde, wobei die flüssige Phase durch Trocknung unterhalb der kritischen Temperatur und unterhalb des kritischen Drucks der flüssigen Phase ("subkritische Bedingungen") aus dem Gel entfernt wurde. Im Gegensatz hierzu spricht man im Allgemeinen von Aerogelen, wenn die Entfernung der flüssigen Phase aus dem Gel unter überkritischen Bedingungen durchgeführt wurde.

Beim Sol-Gel-Verfahren wird zunächst ein Sol auf Basis einer reaktiven organischen Gelvorstufe hergestellt und danach das Sol durch eine vernetzende Reaktion zu einem Gel geliert. Um aus dem Gel ein poröses Material, beispielsweise ein Xerogel, zu erhalten, muss die Flüssigkeit entfernt werden. Dieser Schritt wird nachfolgend vereinfachend als Trocknung bezeichnet.

Die WO-95/02009 offenbart Isocyanat-basierte Xerogele, die insbesondere für Anwendungen im Bereich der Vakuumisolation geeignet sind. Die Publikationsschrift offenbart zudem ein Sol-Gel-basiertes Verfahren zur Herstellung der Xerogele, wobei bekannte, unter anderem aromatische Polyisocyanate sowie ein unreaktives Lösungsmittel zum Einsatz kommen. Als weitere Verbindungen mit aktiven H-Atomen werden aliphatische oder aromatische Polyamine oder Polyole eingesetzt. Die in der Publikationsschrift offenbarten Beispiele umfassen solche, in denen ein Polyisocyanat mit Diaminodiethyltoluol umgesetzt wird. Die offenbarten Xerogele weisen generell mittlere Porengrößen im Bereich von 50 µm auf. In einem Beispiel wird ein mittlerer Porendurchmesser von 10 µm genannt.

Aus der WO-2008/138978 sind Xerogele enthaltend von 30 bis 90 Gew.-% mindestens eines mehrfunktionellen Isocyanats und von 10 bis 70 Gew.-% mindestens eines mehrfunktionellen aromatischen Amins bekannt, deren volumengewichteter mittlerer Porendurchmesser höchstens 5 Mikrometer beträgt.

Die Materialeigenschaften, insbesondere die mechanische Stabilität der bekannten porösen Materialien auf Basis von Polyhamstoff sind jedoch nicht für alle Anwendungen ausreichend. Zudem zeigen die zugrundeliegenden Formulierungen bei der Trocknung eine Schrumpfung unter Verringerung der Porosität und Erhöhung der Dichte.

Ein besonderes Problem bei den aus dem Stand der Technik bekannten Formulierungen auf Basis von Isocyanaten und Aminen sind sogenannte Mischfehler. Mischfehler treten infolge der hohen Reaktionsgeschwindigkeit zwischen Isocyanaten und Aminogruppen auf, da vor einer vollständigen Durchmischung die Gelierungsreaktion bereits weit fortgeschritten ist. Mischfehler führen zu porösen Materialien mit heterogenen und unzureichenden Materialeigenschaften. Ein Konzept zur Verringerung des Phänomens der Mischfehler ist somit allgemein wünschenswert.

Es bestand daher die Aufgabe, die vorgenannten Nachteile zu vermeiden. Insbesondere sollte ein poröses Material zur Verfügung gestellt werden, das die vorgenannten Nachteile nicht oder in geringerem Maße aufweist. Die porösen Materialien sollten eine im Vergleich zum Stand der Technik verringerte Dichte bei vergleichbarer Porosität aufweisen. Darüber hinaus sollten die porösen Materialien auch bei Drücken oberhalb des Vakuumbereiches, insbesondere in einem Druckbereich von ungefähr 1 mbar bis ungefähr 100 mbar eine geringe thermische Leitfähigkeit aufweisen. Dies ist wünschenswert, da in Vakuumpaneelen im Laufe der Zeit eine Druckzunahme erfolgt. Weiterhin sollte das poröse Material gleichzeitig eine hohe Porosität, eine geringe Dichte und eine ausreichend hohe mechanische Stabilität aufweisen.

Schließlich sollten Mischfehler und somit die Heterogenitäten in der Materialstruktur und den Materialeigenschaften in den porösen Materialien, welche bei der Umsetzung der Isocyanate mit den Aminen entstehen, vermieden werden.

Demgemäß wurden die erfindungsgemäßen porösen Materialien und das erfindungsgemäße Verfahren zur Herstellung von porösen Materialien gefunden.

Bevorzugte Ausführungsformen sind den Ansprüchen und der Beschreibung zu entnehmen. Kombinationen bevorzugter Ausführungsformen verlassen nicht den Rahmen dieser Erfindung.

Bevorzugte Bestandteile der erfindungsgemäßen porösen Materialien werden im Folgenden näher beschrieben.

Die mehrfunktionellen Isocyanate (a1) werden im Folgenden gemeinsam als Komponente (a1) bezeichnet. Entsprechend werden die mehrfunktionellen Amine (a2) im Folgenden gemeinsam als Komponente (a2) bezeichnet. Es ist für den Fachmann offensichtlich, dass die genannten Monomerkomponenten im porösen Material in umgesetzter Form vorliegen.

Unter Funktionalität einer Verbindung soll im Rahmen der vorliegenden Erfindung die Zahl der reaktiven Gruppen pro Molekül verstanden werden. Im Fall der Monomerbausteine (a1) ist die Funktionalität die Anzahl der Isocyanatgruppen pro Molekül. Im Falle der Aminogruppen der Monomerbausteine (a2) bezeichnet die Funktionalität die Zahl der reaktiven Aminogruppen pro Molekül. Eine mehrfunktionelle Verbindung weist dabei eine Funktionalität von mindestens 2 auf.

Falls als Komponente (a1) beziehungsweise (a2) Mischungen aus Verbindungen mit unterschiedlicher Funktionalität zum Einsatz kommen, ergibt sich die Funktionalität der Komponenten jeweils aus dem zahlengewichteten Mittel der Funktionalität der einzelnen Verbindungen. Eine mehrfunktionelle Verbindung enthält mindestens zwei der oben genannten funktionellen Gruppen pro Molekül.

Vorzugsweise enthalten die erfindungsgemäßen porösen Materialien von 20 bis 80 Gew.-% der Komponente (a1) und von 20 bis 80 Gew.-% der Komponente (a2), wobei die Summe der Gew.-% der Komponenten (a1) und (a2) stets 100 Gew.-% ergibt. Besonders bevorzugt enthalten die erfindungsgemäßen porösen Materialien von 25 bis 75 Gew.-% der Komponente (a1) und von 25 bis 75 Gew.-% der Komponente (a2), insbesondere von 35 bis 65 Gew.-% der Komponente (a1) und von 35 bis 65 Gew.-% der Komponente (a2).

### Komponente (a1)

Erfindungsgemäß enthält das poröse Material als Komponente (a1) mindestens ein mehrfunktionelles Isocyanat in umgesetzter Form.

Als mehrfunktionelle Isocyanate kommen aromatische, aliphatische, cycloaliphatische und/oder araliphatische Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente (a1) in diesem Fall verschiedene mehrfunktionelle Isocyanate enthält. Als Monomerbausteine (a1) in Betracht kommende mehrfunktionelle Isocyanate weisen zwei (im folgenden Diisocyanate genannt) oder mehr als zwei Isocyanatgruppen pro Molekül der Monomerkomponente auf.

Insbesondere geeignet sind 2,2`-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylendiisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophoron-diisocyanat, IPDI), 1,4- und/oder 1,3-Bis(iso-cyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat.

Als mehrfunktionelle Isocyanate (a1) sind aromatische Isocyanate bevorzugt. Besonders bevorzugt sind als mehrfunktionelle Isocyanate der Komponente (a1) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder RohMDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als mehrfunktionelles Isocyanat besonders bevorzugt ist oligomeres Diphenylmethandiisocyanat. Bei oligomerem Diphenylmethandiisocyanat (im folgenden oligomeres MDI genannt) handelt es sich um ein oder ein Gemisch aus mehreren oligomeren Kondensationsprodukten und somit Derivaten von Diphenylmethandiisocyanat (MDI). Die mehrfunktionellen Isocyanate können bevorzugt auch aus Mischungen von monomeren aromatischen Diisocyanaten und oligomerem MDI aufgebaut sein.

Oligomeres MDI enthält ein oder mehrere mehrkernige Kondensationsprodukte des MDI mit einer Funktionalität von mehr als 2, insbesondere 3 oder 4 oder 5. Oligomeres MDI ist bekannt und wird häufig als Polyphenylpolymethylenlsocyanat oder auch als polymeres MDI bezeichnet. Oligomeres MDI ist üblicherweise aus einer Mischung aus MDI-basierten Isocyanaten mit unterschiedlicher Funktionalität aufgebaut. Üblicherweise wird oligomeres MDI im Gemisch mit monomerem MDI eingesetzt.

Die (mittlere) Funktionalität eines lsocyanates, welches oligomeres MDI enthält, kann im Bereich von ungefähr 2,2 bis ungefähr 5 variieren, insbesondere von 2,4 bis 3,5, insbesondere von 2,5 bis 3. Eine solche Mischung von MDI-basierten mehrfunktionellen Isocyanaten mit unterschiedlichen Funktionalitäten ist insbesondere das Roh-MDI, das bei der Herstellung von MDI anfällt.

Mehrfunktionelle Isocyanate oder Mischungen mehrerer mehrfunktioneller Isocyanate auf Basis von MDI sind bekannt und werden beispielsweise von Elastogran GmbH unter dem Namen Lupranat® vertrieben.

Vorzugsweise beträgt die Funktionalität der Komponente (a1) mindestens zwei, insbesondere mindestens 2,2 und besonders bevorzugt mindestens 2,5. Die Funktionalität der Komponente (a1) beträgt bevorzugt von 2,2 bis 4 und besonders bevorzugt von 2,5 bis 3.

Vorzugsweise beträgt der Gehalt an Isocyanatgruppen der Komponente (a1) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer bevorzugten Ausführungsform besteht die Monomerkomponente (a1) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Dlphenylmethandiisocyanat. Im Rahmen dieser bevorzugten Ausführungsform enthält die Komponente (a1) besonders bevorzugt oligomeres Diphenylmethandiisocyanat und weist eine Funktionalität von mindestens 2,5 auf.

### Komponente (a2)

Erfindungsgemäß enthalten die porösen Materialien im Rahmen der Komponente (a2) mindestens ein mehrfunktionelles substituiertes aromatisches Amin (a2-s) gemäß der allgemeinen Formel I 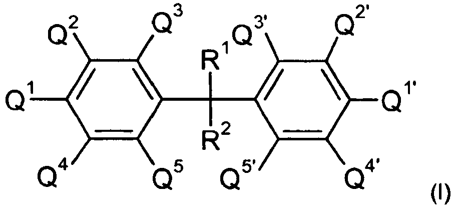 und optional mindestens ein weiteres mehrfunktionelles Amin, welches sich von den Aminen (a2-s) gemäß der allgemeinen Formel I unterscheidet, ausgewählt aus der Gruppe bestehend aus mehrfunktionellen aliphatischen Aminen (a2-a) und mehrfunktionellen aromatischen Aminen (a2-u),
wobei R¹ und R² gleich oder unterschiedlich sein können und unabhängig voneinander ausgewählt werden aus Wasserstoff und linearen oder verzweigten Alkylgruppen mit 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Al-kylgruppe mit 1 bis 12 Kohlenstoffatomen, wobei die Alkylgruppe weitere funktionelle Gruppen tragen kann, unter der Voraussetzung, dass
- die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q1', Q^{3'} und Q^{5'} eine primäre Aminogruppe ist und
- Q², Q4, Q^{2'} und Q^{4'} so gewählt werden, dass die Verbindung gemäß der allgemeinen Formel I mindestens eine lineare oder verzweigte Alkylgruppe, die optional weitere funktionelle Gruppen tragen kann, mit von 1 bis 12 Kohlenstoffatomen in α-Position zu mindestens einer an den aromatischen Kern gebundenen primären Aminogruppe aufweist.

Komponente (a2) besteht somit aus mehrfunktionellen Aminen, wobei die mehrfunktionellen aromatischen Amine (a2-s) gemäß der allgemeinen Formel I ein Bestandteil sind.

Unter mehrfunktionellen Aminen sind solche zu verstehen, welche mindestens zwei gegenüber Isocyanaten reaktive Aminogruppen pro Molekül aufweisen. Gegenüber Isocyanaten reaktiv sind dabei primäre und sekundäre Aminogruppen, wobei die Reaktivität der primären Aminogruppen im Allgemeinen deutlich höher ist als die der sekundären.

Erfindungsgemäß sind R¹ und R² im Rahmen der allgemeinen Formel I gleich oder unterschiedlich und werden unabhängig voneinander ausgewählt aus Wasserstoff, einer primären Aminogruppe und einer linearen oder verzweigten Alkylgruppe mit von 1 bis 6 Kohlenstoffatomen. Vorzugsweise werden R¹ und R² ausgewählt aus Wasserstoff und Methyl. Besonders bevorzugt gilt R¹ = R² = H.

Vorzugsweise werden Q², Q⁴, Q^{2'} und Q^{4'} so gewählt, dass das substituierte aromatische Amin (a2-s) mindestens zwei primäre Aminogruppen umfasst, die jeweils eine oder zwei lineare oder verzweigte Alkylgruppen mit von 1 bis 12 Kohlenstoffatomen in α-Position aufweisen, die weitere funktionelle Gruppen tragen können. Sofern eines oder mehrere aus Q², Q⁴, Q^{2'} und Q^{4'} so gewählt werden, dass sie lineare oder verzweigte Alkylgruppen mit von 1 bis 12 Kohlenstoffatomen entsprechen, die weitere funktionelle Gruppen tragen, dann sind Aminogrupppen und/oder Hydroxygruppen und/oder Halogenatome als solche funktionelle Gruppen bevorzugt.

Vorzugsweise werden die Alkylgruppen im Rahmen der Substituenten Q gemäß der allgemeinen Formel I ausgewählt aus Methyl, Ethyl, n-Propyl, iso-Propyl, n-Butyl, sek-Butyl und tert-Butyl.

Vorzugsweise werden die Amine (a2-s) ausgewählt aus der Gruppe bestehend aus 3,3',5,5'-Tetraalkyl-4,4'-diaminodiphenylmethan, 3,3',5,5'-Tetraalkyl-2,2'-diaminodiphenylmethan und 3,3',5,5'-Tetraalkyl-2,4'-diaminodiphenylmethan, wobei die Alkylgruppen in 3,3',5 und 5'-Position gleich oder unterschiedlich sein können und unabhängig voneinander ausgewählt werden aus linearen oder verzweigten Alkylgruppen mit von 1 bis 12 Kohlenstoffatomen, die weitere funktionelle Gruppen tragen können. Vorzugsweise sind vorgenannte Alkylgruppen Methyl, Ethyl, n-Propyl, i-Propyl, n-Butyi, sek-Butyl oder t-Butyl (jeweils unsubstituiert).

In einer Ausführungsform können eines, mehrere oder alle Wasserstoffatome einer oder mehrerer Alkylgruppen der Substituenten Q durch Halogenatome, insbesondere Chlor, ersetzt sein. Alternativ können eines, mehrere oder alle Wasserstoffatome einer oder mehrerer Alkylgruppen der Substituenten Q durch NH₂ oder OH ersetzt sein. Es ist jedoch bevorzugt, wenn die Alkylgruppen im Rahmen der allgemeinen Formel (I) aus Kohlenstoff und Wasserstoff aufgebaut sind.

In einer besonders bevorzugten Ausführungsform umfasst Komponente (a2) 3,3',5,5'-Tetraalkyl-4,4'-diaminodiphenylmethan, wobei die Alkylgruppen gleich oder unterschiedlich sein können und unabhängig ausgewählt werden aus linearen oder verzweigten Alkylgruppen mit von 1 bis 12 Kohlenstoffatomen, die optional funktionelle Gruppen tragen können. Vorzugsweise werden vorgenannte Alkylgruppen ausgewählt aus unsubstituierten Alkylgruppen, insbesondere Methyl, Ethyl, n-Propyl, iso-Propyl, n-Butyl, sek-Butyl und tert-Butyl, besonders bevorzugt aus Methyl und Ethyl. Ganz besonders bevorzugt ist Tetraethyl-4,4'-diaminodiphenylmethan.

Die vorgenannten mehrfunktionellen Amine des Typs (a2-s) sind dem Fachmann an sich bekannt oder können nach bekannten Methoden hergestellt werden. Eine der bekannten Methoden ist die Umsetzung von Anilin beziehungsweise von Derivaten des Anilins mit Formaldehyd unter saurer Katalyse, insbesondere die Umsetzung von 2,4oder 2,6-Dialkylanilin.

Optional kann die Komponente (a2) auch weitere mehrfunktionelle Amine umfassen. Als weitere mehrfunktionelle Amine kommen insbesondere mehrfunktionelle aromatische Amine (a2-u) in Betracht, welche sich von den Aminen der Struktur (a2-s) unterscheiden, sowie mehrfunktionelle aliphatische Amine (a2-a). Selbstverständlich kommen optional ebenfalls Amine in Betracht, die sowohl aliphatisch als auch aromatisch gebundene reaktive Aminogruppen aufweisen.

Geeignete mehrfunktionelle aromatische Amine (a2-u) sind insbesondere Isomere und Derivate von Di-aminodiphenylmethan. Im Rahmen von Komponente (a2) bevorzugte Isomere und Derivate von Diaminodiphenylmethan sind insbesondere 4,4'-Diaminodiphenylmethan, 2,4'-Diaminodiphenylmethan, 2,2'-Diaminodiphenylmethan und oligomeres Diaminodiphenylmethan.

Geeignete mehrfunktionelle aromatische Amine (a2-u) sind außerdem insbesondere Isomere und Derivate von Toluoldiamin. Im Rahmen von Komponente (a2) bevorzugte Isomere und Derivate von Toluoldiamin sind insbesondere Toluol-2,4-diamin und/oder Toluol-2,6-diamin und Diethyltoluoldiamine, insbesondere 3,5-Diethyltoluol-2,4-diamin und/oder 3,5-Diethyltoluol-2,6-diamin.

In einer ersten bevorzugten Ausführungsform besteht Komponente (a2) ausschließlich aus mehrfunktionellen aromatischen Aminen des Typs (a2-s). In einer zweiten Ausführungsform besteht Komponente (a2) aus mehrfunktionellen aromatischen Aminen der Typen (a2-s) und (a2-u). Im Rahmen der letztgenannten, zweiten bevorzugten Ausführungsform enthält die Komponente (a2) vorzugsweise mindestens ein mehrfunktionelles aromatisches Amin (a2-u), wovon mindestens eines ausgewählt ist aus Isomeren und Derivaten von Diaminodiphenylmethan (MDA).

Besonders bevorzugt umfasst Komponente (a2) im Rahmen der zweiten bevorzugten Ausführungsform entsprechend mindestens ein mehrfunktionelles aromatisches Amin (a2-u) ausgewählt aus 4,4'-Diaminodiphenylmethan, 2,4'-Diaminodiphenylmethan, 2,2'-Diaminodiphenylmethan und oligomerem Diaminodiphenylmethan.

Oligomeres Diaminodiphenylmethan enthält ein oder mehrere mehrkernige Methylenverbrückte Kondensationsprodukte von Anilin und Formaldehyd. Oligomeres MDA enthält mindestens ein, im Allgemeinen jedoch mehrere Oligomere des MDA mit einer Funktionalität von mehr als 2, insbesondere 3 oder 4 oder 5. Oligomeres MDA ist bekannt oder kann nach an sich bekannten Methoden hergestellt werden. Üblicherweise wird oligomeres MDA in Form von Mischungen mit monomerem MDA eingesetzt.

Die (mittlere) Funktionalität eines mehrfunktionellen Amins (a2-u), welches oligomeres MDA enthält, kann im Bereich von ungefähr 2,3 bis ungefähr 5 variieren, insbesondere von 2,3 bis 3,5 und insbesondere von 2,3 bis 3. Eine solche Mischung von MDAbasierten mehrfunktionellen Aminen mit unterschiedlichen Funktionalitäten ist insbesondere das Roh-MDA, das insbesondere bei der Kondensation von Anilin mit Formaldehyd, üblicherweise katalysiert durch Salzsäure, als Zwischenprodukt der Herstellung von Roh-MDI entsteht.

Im Rahmen der zweiten Ausführungsform ist besonders bevorzugt, wenn die Komponente (a2) oligomeres Diaminodiphenylmethan als Verbindung (a2-u) enthält und insgesamt eine Funktionalität von mindestens 2,1 aufweist.

In einer dritten bevorzugten Ausführungsform, die eine Abwandlung der ersten oder zweiten Ausführungsform sein kann, können als weiterer Bestandteil der Komponente (a2) , d. h. zusätzlich zu den Aminen der ersten beziehungsweise zweiten bevorzugten Ausführungsform, auch mehrfunktionelle aliphatische Amine (a2-a) verwendet werden.

Im Rahmen der dritten bevorzugten Ausführungsform enthalten die mehrfunktionellen aliphatischen Amine (a2-a) vorzugsweise mindestens eine primäre Aminogruppe, insbesondere mindestens zwei primäre Aminogruppen. Die geeigneten mehrfunktionellen aliphatischen Amine können einzeln oder in Mischungen eingesetzt werden.

Entsprechende mehrfunktionelle aliphatische Amine sind an sich bekannt und in der internationalen Publikationsschrift WO-2009/027310, Seite 7, Zeile 28 bis Seite 11, Zeile 32 beschrieben, auf die hiermit ausdrücklich Bezug genommen wird.

Als Amin (a2-a) besonders bevorzugt sind Polyalkylenpolyamine. Unter dem Begriff Polyalkylenpolyamin sollen im Rahmen der vorliegenden Erfindung aliphatische Amine verstanden werden, die mindestens 3 Aminogruppen (primär, sekundär oder tertiär) enthalten und die ein gewichtsmittleres Molekulargewicht (Mw) von mindestens 500 g/mol aufweisen. Geeignete Polyalkylenpolyamine werden in der WO-2009/027310 auf Seite 87, Zeile 23 bis Seite 11, Zeile 23 beschrieben.

Als Polyalkylenpolyamine sind insbesondere Polyethylenimine besonders bevorzugt. Unter Polyethyleniminen werden im Rahmen der vorliegenden Erfindung sowohl Oligomere als auch Homo- und Copolymere verstanden, welche die Gruppierung -CH₂-CH₂-NH- aufweisen sowie mindestens 3 Aminogruppen enthalten und ein gewichtsmittleres Molekulargewicht (Mw) von mindestens 500 g/mol aufweisen. Vorzugsweise werden als Polyethylenimine jedoch solche eingesetzt, die im Wesentlichen aus Ethylenimin aufgebaut sind, insbesondere Homopolymerisate von Ethylenimin.

Vorzugsweise sind die als Amine des Typs (a2-a) besonders bevorzugten Polyethylenimine aus Einheiten aufgebaut, die ausgewählt sind aus terminalen Ethylenimineinheiten der Struktur -(CH₂-CH₂-NH₂), linearen Ethylenimineinheiten der Struktur -(CH₂-CH₂-NH)- und verzweigten Ethylenimineinheiten der Struktur N-(CH₂CH₂-)₃.

Die Polyethylenimine werden vorzugsweise in wasserfreier Form eingesetzt, wobei wasserfrei bedeutet, dass der Wassergehalt von 0 bis 1,5 Gew.-% gemäss DIN 53715 nach Karl Fischer, vorzugsweise von 0 bis 1 Gew.-%, besonders bevorzugt von 0 bis 0,5 Gew.-% beträgt.

Vorzugsweise sind die Polyethylenimine hochverzweigt. Unter hochverzweigten Polyethyleniminen werden im Rahmen dieser Erfindung unvernetzte Makromoleküle mit - NH-Gruppen verstanden, die bezüglich ihres strukturellen Aufbaus, insbesondere bezüglich der Länge und Abfolge der Abschnitte zwischen Verzweigungspunkten, uneinheitlich sind. Sie können entweder ausgehend von einem Zentralmolekül analog zu Dendrimeren, jedoch mit uneinheitlicher Kettenlänge der Äste aufgebaut sein. Sie können aber auch linear, mit funktionellen Seitengruppen, aufgebaut sein oder aber, als Kombination der beiden Extreme, lineare und verzweigte Molekülteile aufweisen.

Der Verzweigungsgrad (degree of branching, DB) ist definiert als DB = (T + Z) / (T + Z + L), wobei T die Anzahl der terminalen Monomereinheiten, Z die Anzahl der verzweigten Monomereinheiten, und L die Anzahl der linearen Monomereinheiten, bedeutet und wird üblicherweise in % angegeben. Diese Anzahlen werden mittels ¹³C-Kemresonanzspektren als primäre (ergibt T), tertiäre (ergibt Z) sowie sekundäre (ergibt L) Aminogruppen bestimmt. Zur Definition des degree of branching siehe auch H. Frey et al., Acta Polym. 1997, 48, 30.

Der Verzweigungsgrad DB der im Rahmen der dritten bevorzugten Ausführungsform besonders bevorzugten hochverzweigten Polyethylenimine beträgt von 40 bis 100 %, bevorzugt von 50 bis 80 % und insbesondere von 55 bis 70 %.

Geeignete Polyethylenimine sind kommerziell erhältlich, etwa als Lupasol® von BASF.

Hochverzweigte Polyethylenimine mit von 2 bis 6, insbesondere von 2 bis 4 primären Aminogruppen und einem zahlenmittleren Molekulargewicht von 400 bis ungefähr 10000 g/mol, vorzugsweise von 800 bis ungefähr 6000 g/mol und die ein Verzweigungsgrad DB von 40 bis 100 %, bevorzugt von 50 bis 80 % und insbesondere von 55 bis 70 % aufweisen, sind als Amin (a2-a) besonders geeignet.

Der Anteil der Amine des Typs (a2-s) gemäß der allgemeinen Formel I am Gesamtgewicht aller mehrfunktionellen Amine der Komponente (a2), die somit insgesamt 100 Gew.-% ergeben, beträgt vorzugsweise von 1 bis 100 Gew.-%, insbesondere von 10 bis 100 Gew.-%, ganz besonders bevorzugt von 30 bis 100 Gew.-%.

Der Anteil der mehrfunktionellen aliphatischen Amine (a2-a) am Gesamtgewicht aller mehrfunktionellen Amine der Komponente (a2) beträgt vorzugsweise von 0 bis 90 Gew.-%, insbesondere von 0 bis 50 Gew.-%, besonders bevorzugt von 0 bis 20 Gew.-%.

Der Anteil der mehrfunktionellen aromatischen Amine (a2-u), die sich von den Aminen des Typs (a2-s) unterscheiden, am Gesamtgewicht aller mehrfunktionellen Amine der Komponente (a2) beträgt vorzugsweise von 0 bis 90 Gew.-%, insbesondere von 0 bis 80 Gew.-%, besonders bevorzugt von 0 bis 60 Gew.-%.

Die Verwendung von Polyalkylenpolyaminen als mehrfunktionelles aliphatisches Amin (a2-a) führt in Kombination mit den Aminen (a2-s) zu porösen Materialien mit einer besonders hohen mechanischen Stabilität bei gleichzeitig hoher Porosität, hohem Porenvolumen und geringer Dichte.

Entsprechend umfasst die Komponente (a2) in einer besonders bevorzugten Ausführungsform von insgesamt 50 bis 99,5 Gew.-% mehrfunktioneller aromatischer Amine (a2-s) gemäß der allgemeinen Formel I und gegebenenfalls davon unterschiedlicher aromatischer Amine (a2-u) sowie von 0,5 bis 50 Gew.-% mehrfunktioneller aliphatischer Amine (a2-a), wobei die Summe der Gew.-% aller mehrfunktioneller Amine 100 Gew.-% ergibt. In einer ganz besonders bevorzugten Ausführungsform enthält Komponente (a2) von 80 bis 99,5 Gew.-% mehrfunktionelle aromatische Amine (a2-s) gemäß der allgemeinen Formel I und von 0,5 bis 20 Gew.-% mehrfunktionelle aliphatischer Amine (a2-a).

Verfahren zur Herstellung von porösen Materialien

Ein bevorzugtes Verfahren zur Herstellung der erfindungsgemäßen porösen Materialien umfasst folgende Schritte:
(a) Bereitstellen der Komponente (a1) und der Komponente (a2) in einem Lösungsmittel (C);
(b) Umsetzung der Komponenten (a1) und (a2) in Gegenwart des Lösungsmittels (C) zu einem Gel;
(c) Trocknen des im vorigen Schritt erhaltenen Gels.

Vorzugsweise werden gemäß Schritt (a) die Komponenten (a1) und (a2) zunächst getrennt voneinander bereitgestellt, insbesondere getrennt voneinander in dem Lösungsmittel (C) vorgelöst.

Gemäß einer bevorzugten Ausführungsform wird die Komponente (a1) in einem ersten Behältnis und die Bestandteile Komponente (a2) in einem zweiten Behältnis jeweils in einem Lösungsmittel (C) bereitgestellt und schließlich zu Beginn von Schritt (b) vereinigt. Ein bevorzugtes Verfahren zur Herstellung der erfindungsgemäßen porösen Materialien umfasst demzufolge folgende Schritte:
(a-1) Bereitstellen der Komponente (a1) und getrennt davon der Komponente (a2) jeweils in einem Lösungsmittel (C);
(a-2) Bereitstellen einer Gelvorstufe (A) enthaltend die Komponenten (a1) und (a2) in einem Lösungsmittel (C) durch Vereinigung der in Schritt (a-1) bereitgestellten Komponenten;
(b) Umsetzung der Gelvorstufe (A) in Gegenwart des Lösungsmittels (C) zu einem Gel;
(c) Trocknen des im vorigen Schritt erhaltenen Gels.

Bevorzugte Ausführungsformen der Schritte (a) bis (c) werden im Folgenden näher beschreiben.

### Schritt (a)

Erfindungsgemäß erfolgt in Schritt (a) das Bereitstellen der Komponente (a1) und der Komponente (a2) jeweils in einem Lösungsmittel (C). Die Gelvorstufe (A) wird durch das Mischen der Komponenten (a1) und (a2) erhalten. Die Gelvorstufe (A) enthält somit die weiter oben beschriebenen Monomerbausteine (a1) und (a2) in den ebenfalls weiter oben beschriebenen Mengenanteilen.

Das Einsatz-Verhältnis (Äquivalenzverhältnis) von NCO-Gruppen der Komponente (a1) zu Aminogruppen der Komponente (a2) beträgt bevorzugt von 1,01 zu 1 bis 1,5 zu 1. Besonders bevorzugt beträgt das Äquivalenzverhältnis von NCO-Gruppen der Komponente (a1) zu Aminogruppen der Komponente (a2) von 1,1 zu 1 bis 1,4 zu 1, insbesondere von 1,1 zu 1 bis 1,3 zu 1. Ein Überschuss an NCO-Gruppen führt zu einer geringeren Schrumpfung des porösen Materials, insbesondere Xerogel, bei der Entfernung des Lösungsmittels.

Die Monomerbausteine (a1) und (a2) liegen in der Gelvorstufe (A) in monomerer Form vor oder wurden vorab durch teilweise oder nicht-äquimolare Umsetzung von Isocyanat- und Aminogruppen in ein Präpolymer umgewandelt, das gegebenenfalls mit weiteren Monomerbausteinen (a1) und (a2) die Gelvorstufe (A) bildet. Die Gelvorstufe (A) ist somit gelierbar, das heißt sie kann durch Vernetzung im Rahmen von Schritt (b) in ein Gel, ein vernetztes Polymer, umgesetzt werden. Die Mengenanteile der Komponenten (a1) und (a2) im porösen Material, worin sie in polymerer Form vorliegen, entsprechen den Mengenanteilen der Komponenten (a1) und (a2) in der Gelvorstufe (A), worin sie in noch nicht umgesetzter Form vorliegen.

Die Viskosität der eingesetzten Komponente (a1) kann in einem weiten Bereich variieren. Vorzugsweise weist die in Schritt (a) des erfindungsgemäßen Verfahrens eingesetzte Komponente (a1) eine Viskosität von 100 bis 3000 mPa.s, besonders bevorzugt von 200 bis 2500 mPa.s, auf.

In Schritt (a) des erfindungsgemäßen Verfahrens stellt man somit eine Mischung enthaltend die Gelvorstufe (A) in einem flüssigen Verdünnungsmittel bereit. Der Begriff Lösungsmittel (C) umfasst im Rahmen der vorliegenden Erfindung flüssige Verdünnungsmittel, das heißt sowohl Lösungsmittel im engeren Sinne als auch Dispersionsmittel. Die Mischung kann insbesondere eine echte Lösung, eine kolloidale Lösung oder eine Dispersion, z.B. eine Emulsion oder Suspension, sein. Bevorzugt ist die Mischung eine echte Lösung. Das Lösungsmittel (C) ist eine unter den Bedingungen des Schrittes (a) flüssige Verbindung, vorzugsweise ein organisches Lösungsmittel.

Als Lösungsmittel (C) kommen prinzipiell eine organische Verbindung oder ein Gemisch aus mehreren Verbindungen in Betracht, wobei das Lösungsmittel (C) bei den Temperatur- und Druckbedingungen, unter denen die Mischung in Schritt (a) bereitgestellt wird (kurz: Lösungsbedingungen), flüssig ist. Die Zusammensetzung des Lösungsmittels (C) wird so gewählt, dass es in der Lage ist, die organische Gelvorstufe zu lösen oder zu dispergieren, bevorzugt zu lösen. Bevorzugte Lösungsmittel (C) sind solche, die ein Lösungsmittel für die organische Gelvorstufe (A) sind, d. h. solche, die die organische Gelvorstufe (A) unter Reaktionsbedingungen vollständig lösen.

Das Reaktionsprodukt aus Schritt (b) ist ein Gel, d. h. ein viskoelastisches chemisches Netzwerk, das durch das Lösungsmittel (C) gequollen ist. Ein Lösungsmittel (C), welches ein gutes Quellmittel für das in Schritt (b) gebildete Netzwerk darstellt, führt in der Regel zu einem Netzwerk mit feinen Poren und kleinem mittleren Porendurchmesser, wohingegen ein Lösungsmittel (C), welches ein schlechtes Quellmittel für das aus Schritt (b) resultierende Gel darstellt, in der Regel zu einem grobporigen Netzwerk mit großem mittleren Porendurchmesser führt.

Die Wahl des Lösungsmittels (C) beeinflusst somit die angestrebte Porengrößenverteilung und die angestrebte Porosität. Die Wahl des Lösungsmittels (C) erfolgt im Allgemeinen zudem so, dass ein Ausfällen oder Ausflocken durch Bildung eines präzipitierten Reaktionsproduktes während oder nach Schritt (b) des erfindungsgemäßen Verfahrens weitestgehend nicht auftritt.

Bei Wahl eines geeigneten Lösungsmittels (C) ist der Anteil an präzipitiertem Reaktionsprodukt üblicherweise kleiner als 1 Gew.-%, bezogen auf das Gesamtgewicht der Mischung. Die Menge an gebildetem präzipitiertem Produkt in einem bestimmten Lösungsmittel (C) kann gravimetrisch bestimmt werden, indem die Reaktionsmischung vor dem Gelpunkt über ein geeignetes Filter filtriert wird.

Als Lösungsmittel (C) kommen die aus dem Stand der Technik bekannten Lösungsmittel für Isocyanat-basierte Polymere in Frage. Bevorzugte Lösungsmittel sind dabei solche, die ein Lösungsmittel für die Komponenten (a1) und (a2) sind, d. h. solche, die die Bestandteile der Komponenten (a1) und (a2) unter Reaktionsbedingungen weitgehend vollständig lösen, so dass der Gehalt der organischen Gelvorstufe (A) in der gesamten in Schritt (a) bereitgestellten Mischung einschließlich des Lösungsmittels (C) bevorzugt mindestens 5 Gew.-% beträgt. Bevorzugt ist das Lösungsmittel (C) gegenüber Komponente (a1) inert, d. h. nicht reaktiv.

Als Lösungsmittel (C) kommen beispielsweise Ketone, Aldehyde, Alkylalkanoate, Amide wie Formamid und N-Methylpyrollidon, Sulfoxide wie Dimethylsulfoxid, aliphatische und cycloaliphatische halogenierte Kohlenwasserstoffe, halogenierte aromatische Verbindungen und fluorhaltige Ether in Betracht. Ebenso in Betracht kommen Mischungen aus zwei oder mehreren der vorgenannten Verbindungen.

Weiterhin kommen Acetale, insbesondere Diethoxymethan, Dimethoxymethan und 1,3-Dioxolan, als Lösungsmittel (C) in Betracht.

Dialkylether und zyklische Ether sind als Lösungsmittel (C) ebenfalls geeignet. Bevorzugte Dialkylether sind insbesondere solche mit 2 bis 6 Kohlenstoffatomen, insbesondere Methyl-Ethylether, Diethylether, Methyl-Propylether, Methyl-Isopropylether, Propyl-Ethylether, Ethyl-Isopropylether, Dipropylether, Propyl-Isopropylether, Diisopropylether, Methyl-Butylether, Methyl-Isobutylether, Methyl-t-Butylether, Ethyl-n-Butylether, Ethyl-Isobutylether und Ethyl-t-Butylether. Bevorzugte zyklische Ether sind insbesondere Tetrahydrofuran, Dioxan und Tetrahydropyran.

Aldehyde und/oder Ketone sind als Lösungsmittel (C) besonders bevorzugt. Als Lösungsmittel (C) geeignete Aldehyde oder Ketone sind insbesondere solche entsprechend der allgemeinen Formel R²-(CO)-R¹, wobei R¹ und R² Wasserstoff oder Alkylgruppen mit 1,2,3 oder 4 Kohlenstoffatomen sind. Geeignete Aldehyde oder Ketone sind insbesondere Acetaldehyd, Propionaldehyd, n-Butyraldehyd, Isobutyraldehyd, 2-Ethylbutyraldehyd, Valeraldehyd, Isopentaldehyd, 2-Methylpentaldehyd, 2-Ethylhexaldehyde, Acrolein, Methacrolein, Crotonaldehyd, Furfural, Acroleindimer, Methacroelindimer, 1,2,3,6-Tetrahydrobenzaldehyd, 6-Methyl-3-cyclohexenaldehyd, Cyanacetaldehyd, Glyoxynsäureethylester, Benzaldehyd, Aceton, Methylisobutylketon, Diethylketon, Methylethylketon, Methylisobutylketon, Methyl-n-butylketon, Ethylisopropylketon, 2-Acetylfuran, 2-Methoxy-4-methylpentan-2-on, Cyclohexanon und Acetophenon. Die vorgenannten Aldehyde und Ketone können auch in Form von Mischungen eingesetzt werden. Ketone und Aldehyde mit Alkylgruppen mit bis zu 3 Kohlenstoffatomen pro Substituent sind als Lösungsmittel (C) bevorzugt. Besonders bevorzugt ist Aceton.

In vielen Fällen ergeben sich besonders geeignete Lösungsmittel (C), indem man zwei oder mehrere miteinander vollständig mischbare Verbindungen, ausgewählt aus den vorgenannten Lösungsmitteln, in Form eines Gemisches einsetzt.

Sofern als Bestandteil der Komponente (a2) ein mehrfunktionelles aliphatisches Amin (a2-a) verwendet wird, dann ist es von Vorteil, die primären Aminogruppen der aliphatischen Amine zu Beginn von Schritt (b) geschützt einzusetzen, so dass die primären Aminogruppen im Wesentlichen nicht in freier Form als -NH₂ vorliegen. Die geschützt vorliegenden primären Aminogruppen der aliphatischen Amine weisen eine verringerte Reaktivität gegenüber Isocyanaten auf. Besonders bevorzugt liegen die primären Aminogruppen der aliphatischen Amine in Schritt (b) in Form eines Ketimins und/oder eines Aldimins vor. Vorzugsweise werden derartige Aldimine und/oder Ketimine durch Vorablösen des Amins (a2-a) in einem der vorgenannten Adehyde und/oder Ketone unter Bildung eines entsprechenden Aldimins und/oder Ketimins hergestellt.

Entsprechende Methoden sind dem Fachmann an sich bekannt und sind in der WO-2009/027310 auf Seite 12, Zeile 24 bis Seite 15, Zeile 10 sowie auf Seite 18, Zeile 23 bis Seite 19, Zeile 13 beschrieben.

Um in Schritt (b) ein ausreichend stabiles Gel zu erhalten, das bei der Trocknung in Schritt (c) nicht stark schrumpft, darf der Anteil der Gelvorstufe (A) an der gesamten, in Schritt (a) des erfindungsgemäßen Verfahrens bereitgestellten Mischung im Allgemeinen nicht weniger als 5 Gew.-% betragen. Bevorzugt beträgt der Anteil der Gelvorstufe (A) an der gesamten, in Schritt (a) des erfindungsgemäßen Verfahrens bereitgestellten Mischung einschließlich des Lösungsmittels (C) mindestens 6 Gew.-%, besonders bevorzugt mindestens 8 Gew.-%, insbesondere mindestens 10 Gew.-%.

Andererseits darf die Konzentration der Gelvorstufe (A) in der bereitgestellten Mischung nicht zu hoch gewählt werden, da ansonsten kein poröses Material mit günstigen Eigenschaften erhalten wird. Im Allgemeinen beträgt der Anteil der Gelvorstufe (A) an der gesamten, in Schritt (a) des erfindungsgemäßen Verfahrens bereitgestellten Mischung höchstens 40 Gew.-%. Bevorzugt beträgt der Anteil der Gelvorstufe (A) an der gesamten, in Schritt (a) des erfindungsgemäßen Verfahrens bereitgestellten Mischung einschließlich des Lösungsmittels (C) höchstens 35 Gew.-%, besonders bevorzugt höchstens 25 Gew.-%, insbesondere höchstens 20 Gew.-%.

Die in Schritt (a) bereitgestellte Mischung kann außerdem übliche, dem Fachmann bekannte Hilfsmittel als weitere Bestandteile enthalten. Genannt seien beispielsweise oberflächenaktive Substanzen, Flammschutzmittel, Keimbildungsmittel, Oxidationsstabilisatoren, Gleit- und Entformungshilfen, Farbstoffe und Pigmente, Stabilisatoren, z.B. gegen Hydrolyse, Licht, Hitze oder Verfärbung, anorganische und/oder organische Füllstoffe, Verstärkungsmittel und Biozide.

Nähere Angaben über die oben genannten Hilfsmittel- und Zusatzstoffe sind der Fachliteratur zu entnehmen, z.B. aus Plastics Additive Handbook, 5th edition, H. Zweifel, ed. Hanser Publishers, München, 2001.

Das Bereitstellen der Mischung gemäß Schritt (a) des erfindungsgemäßen Verfahrens kann auf übliche Weise erfolgen. Bevorzugt wird dazu ein Rührer oder eine andere Mischvorrichtung eingesetzt, um eine gute Durchmischung zu erzielen. Die sonstigen Mischbedingungen sind in der Regel nicht kritisch, beispielsweise kann man bei 0 bis 100°C und 0,1 bis 10 bar (absolut), insbesondere z.B. bei Raumtemperatur und Atmosphärendruck, mischen.

Die in Schritt (a) bereitgestellte Mischung kann auch als Sol bezeichnet werden. Es soll dabei unter einem Sol sowohl eine kolloidale Lösung, in der die organische Gelvorstufe (A) feinstverteilt in einem Lösungsmittel als Dispersionsmedium dispergiert ist, oder eine echte Lösung der organischen Gelvorstufe (A) in einem Lösungsmittel verstanden werden.

### Schritt (b)

Erfindungsgemäß erfolgt in Schritt (b) die Umsetzung der Komponenten (a1) und (a2) in Gegenwart des Lösungsmittels (C) zu einem Gel. In Schritt (b) des erfindungsgemäßen Verfahrens wird somit die organische Gelvorstufe (A) in einer Gelierungsreaktion zu einem Gel umgesetzt. Bei der Gelierungsreaktion handelt es sich um eine Polyadditionsreaktion, insbesondere um eine Polyaddition von Isocyanatgruppen und Aminogruppen.

Unter einem Gel soll ein vernetztes System auf Basis eines Polymers verstanden werden, das in Kontakt mit einer Flüssigkeit (sog. Solvogel oder Lyogel, bzw. mit Wasser als Flüssigkeit: Aquagel oder Hydrogel) vorliegt. Dabei bildet die Polymerphase ein kontinuierliches räumliches Netzwerk.

Im Rahmen von Schritt (b) des erfindungsgemäßen Verfahrens entsteht das Gel üblicherweise durch Ruhenlassen, z.B. durch einfaches Stehenlassen des Behälters, Reaktionsgefäßes oder Reaktors, in dem sich die Mischung befindet (im folgenden Geliervorrichtung genannt). Bevorzugt wird während des Gelierens (Gelbildung) die Mischung nicht gerührt oder durchmischt, weil dies die Ausbildung des Gels behindern könnte. Es hat sich als vorteilhaft erwiesen, die Mischung während des Gelierens abzudecken bzw. die Geliervorrichtung zu verschließen.

Die Gelierung ist dem Fachmann an sich bekannt und wird beispielsweise in der WO-2009/027310 auf Seite 21, Zeile 19 bis Seite 23, Zeile 13 beschrieben.

### Schritt (c)

Erfindungsgemäß wird in Schritt (c) das im vorigen Schritt erhaltene Gel getrocknet.

Grundsätzlich kommt eine Trocknung unter überkritischen Bedingungen in Betracht, vorzugsweise nach Austausch des Lösungsmittels durch CO₂ oder anderen für Zwecke der überkritischen Trocknung geeigneter Lösungsmittel. Eine derartige Trocknung ist dem Fachmann an sich bekannt. Überkritische Bedingungen kennzeichnen eine Temperatur und einen Druck, bei der die zu entfernende fluide Phase im überkritischen Zustand vorliegt. Hierdurch lässt sich die Schrumpfung des Gelkörpers beim Entfernen des Lösungsmittels minimieren.

Es ist allerdings angesichts der einfachen Verfahrensführung bevorzugt, die erhaltenen Gele durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit zu trocknen.

Vorzugsweise erfolgt das Trocknen des erhaltenen Gels durch Überführung des Lösungsmittels (C) in den gasförmigen Zustand bei einer Temperatur und einem Druck unterhalb der kritischen Temperatur und des kritischen Drucks des Lösungsmittels (C). Demzufolge erfolgt vorzugsweise das Trocknen durch Entfernung des Lösungsmittels (C), das bei der Umsetzung zugegen war, ohne vorherigen Austausch gegen ein weiteres Lösungsmittel.

Entsprechende Methoden sind dem Fachmann ebenfalls bekannt und werden in der WO-2009/027310 auf Seite 26, Zeile 22 bis Seite 28, Zeile 36 beschrieben.

### Eigenschaften der porösen Materialien und Verwendung

Xerogele sind als poröse Materialien im Rahmen der vorliegenden Erfindung bevorzugt, d. h. vorzugsweise ist das erfindungsgemäße poröse Material ein Xerogel.

Unter einem Xerogel wird im Rahmen der vorliegenden Erfindung ein poröses Material mit einer Porosität von mindestens 70 Vol.-% und einem volumengemittelten mittleren Porendurchmesser von höchstens 50 Mikrometer verstanden, welches durch ein Sol-Gel-Verfahren hergestellt wurde, wobei die flüssige Phase durch Trocknen unterhalb der kritischen Temperatur und unterhalb des kritischen Drucks der flüssigen Phase ("subkritische Bedingungen") aus dem Gel entfernt wurde.

Der mittlere Porendurchmesser wird mittels Quecksilber-Intrusionsmessung nach DIN 66133 bestimmt und ist im Rahmen der vorliegenden Erfindung grundsätzlich ein volumengewichteter Mittelwert. Die Quecksilber-Intrusionsmessung nach DIN 66133 ist eine porosimetrische Methode und wird in einem Porosimeter durchgeführt. Dabei wird Quecksilber in eine Probe des porösen Materials gepresst. Kleine Poren erfordern einen höheren Druck, um mit dem Quecksilber gefüllt zu werden als große Poren, und aus dem entsprechenden Druck/Volumen-Diagramm kann man eine Porengrößenverteilung und den volumengewichteten mittleren Porendurchmesser bestimmen.

Vorzugsweise beträgt der volumengewichtete mittlere Porendurchmesser des porösen Materials höchstens 5 Mikrometer. Besonders bevorzugt beträgt der volumengewichtete mittlere Porendurchmesser des porösen Materials höchstens 4 Mikrometer, ganz besonderes bevorzugt höchstens 3 Mikrometer und insbesondere höchstens 2,5 Mikrometer.

Zwar ist eine möglichst geringe Porengröße bei hoher Porosität aus Sicht einer geringen thermischen Leitfähigkeit wünschenswert. Herstellungsbedingt und um ein mechanisch ausreichend stabiles poröses Material zu erhalten, ergibt sich jedoch eine praktische untere Grenze des volumengewichteten mittleren Porendurchmessers. Im Allgemeinen beträgt der volumengewichtete mittlere Porendurchmesser mindestens 200 nm, vorzugsweise mindestens 400 nm. In vielen Fällen beträgt der volumengewichtete mittlere Porendurchmesser mindestens 500 nm, insbesondere mindestens 1 Mikrometer.

Bevorzugt weist das erfindungsgemäße poröse Material eine Porosität von mindestens 70 Vol.-%, insbesondere von 70 bis 99 Vol.-%, besonders bevorzugt mindestens 80 Vol.-% auf, ganz besonders bevorzugt mindestens 85 Vol.-%, insbesondere von 85 bis 95 Vol.-%. Die Porosität in Vol.-% bedeutet, dass der genannte Anteil des Gesamtvolumens des porösen Materials aus Poren besteht. Zwar ist aus Sicht einer minimalen Wärmeleitfähigkeit meist eine möglichst hohe Porosität erwünscht, doch ist die Porosität durch die mechanischen Eigenschaften und die Verarbeitbarkeit des porösen Materials nach oben begrenzt.

Erfindungsgemäß liegen die Komponenten (a1) und (a2) im porösen Material in umgesetzter (polymerer) Form vor. Aufgrund der erfindungsgemäßen Zusammensetzung liegen die Monomerbausteine (a1) und (a2) im porösen Material überwiegend über Harnstoffverknüpfungen gebunden vor. Eine weitere mögliche Verknüpfung im porösen Material sind Isocyanurat-Verknüpfungen, die durch Trimerisation von Isocyanatgruppen der Monomerbausteine (a1) entstehen. Sofern das poröse Material weitere Komponenten enthält, sind weitere mögliche Verknüpfungen beispielsweise Urethangruppen, welche durch Reaktion von Isocyanatgruppen mit Alkoholen oder Phenolen entstehen.

Bevorzugt liegen die Komponenten (a1) und (a2) im porösen Material zu mindestens 50 mol-% durch Harnstoffgruppen -NH-CO-NH- verknüpft vor. Vorzugsweise liegen die Komponenten (a1) bis (a3) im porösen Material von 50 bis 100 mol-% durch Harnstoffgruppen verknüpft vor, insbesondere von 60 bis 100 mol-%, ganz besonders bevorzugt von 70 bis 100 mol-%, insbesondere 80 bis 100 mol-%, beispielsweise von 90 bis 100 mol-%.

Die zu 100 mol-% fehlenden mol-% liegen als weitere Verknüpfungen vor, insbesondere als Isocyanurat-Verknüpfungen. Die weiteren Verknüpfungen können jedoch auch in Form anderer, dem Fachmann bekannter Verknüpfungen von Isocyanat-Polymeren vorliegen. Beispielhaft genannt seien Ester-, Harnstoff-, Biuret-, Allophanat-, Carbodiimid-, Isocyanurat-, Uretdion- und/oder Urethangruppen.

Die Bestimmung der mol-% der Verknüpfungen der Monomerbausteine im porösen Material erfolgt mittels NMR-Spektroskopie (Kernspinresonanz) im Festkörper oder in gequollenem Zustand. Geeignete Bestimmungsmethoden sind dem Fachmann bekannt.

Die Dichte der gemäß des erfindungsgemäßen Verfahrens erhältlichen organischen porösen Materialien beträgt üblicherweise 20 bis 600 g/l, bevorzugt 50 bis 500 g/l und besonders bevorzugt 100 bis 300 g/l.

Das erfindungsgemäße Verfahren ergibt ein zusammenhängendes poröses Material und nicht nur ein Polymerpulver oder -partikel. Dabei wird die räumliche Form des resultierenden porösen Materials durch die Form des Gels bestimmt, die wiederum durch die Form der Geliervorrichtung bestimmt wird. So ergibt beispielsweise ein zylindrischer Gelierbehälter üblicherweise ein annähernd zylinderförmiges Gel, dass dann zu einem porösen Material in Zylinderform getrocknet wird.

Die erfindungsgemäßen porösen Materialien und die durch das erfindungsgemäße Verfahren erhältlichen porösen Materialien weisen eine geringe Wärmeleitfähigkeit, eine hohe Porosität und eine geringe Dichte bei gleichzeitig hoher mechanischer Stabilität auf. Die porösen Materialien weisen zudem eine geringe mittlere Porengröße auf. Die Kombination der vorgenannten Eigenschaften erlaubt den Einsatz als Dämmstoff im Bereich der thermischen Isolation, insbesondere für Anwendungen im Vakuumbereich, wo eine möglichst geringe Dicke von Vakuumplatten bevorzugt ist, beispielsweise in Kühlgeraten oder in Gebäuden. So ist die Verwendung in Vakuumisolationspaneelen, insbesondere als Kernmaterial für Vakuumisolationspaneelen, bevorzugt. Bevorzugt ist außerdem die Verwendung der erfindungsgemäßen porösen Materialien als Dämmstoff.

Darüber hinaus werden durch die geringe thermische Leitfähigkeit der erfindungsgemäßen porösen Materialien Anwendungen bei Drücken von 1 bis 100 mbar und insbesondere von 10 mbar bis 100 mbar möglich. Das Eigenschaftsprofil der erfindungsgemäßen porösen Materialien eröffnet insbesondere Anwendungen, bei denen eine lange Lebensdauer der Vakuumpanele gewünscht wird und die auch bei einer Druckzunahme von ungefähr 2 mbar pro Jahr noch nach vielen Jahren, beispielsweise bei einem Druck von 100 mbar, eine niedrige Wärmeleitfähigkeit aufweisen. Die erfindungsgemäßen porösen Materialien und die durch das erfindungsgemäße Verfahren erhältlichen porösen Materialien weisen günstige thermische Eigenschaften einerseits und günstige Materialeigenschaften wie einfache Verarbeitbarkeit und hohe mechanische Stabilität, beispielsweise geringe Brüchigkeit, andererseits auf.

### Beispiele

Die Bestimmung des Porenvolumens in ml pro g Probe und der mittleren Porengröße der Materialien erfolgte mittels Quecksilber-Porosimetrie nach DIN 66133 (1993) bei Raumtemperatur. Die mittlere Porengröße ist im Rahmen dieser Erfindung gleichzusetzen mit dem mittleren Porendurchmesser. Die Bestimmung des volumengewichteten mittleren Porendurchmessers erfolgt dabei rechnerisch aus der nach oben genannter Norm bestimmten Porengrößenverteilung.

Die Porosität in der Einheit Vol.-% wurde gemäß der Formel P = (Vᵢ / (Vᵢ + Vₛ))* 100 Vol.-% berechnet, wobei P die Porosität, Vᵢdas Hg-Intrusionsvolumen nach DIN 66133 in ml/g und Vₛ das spezifische Volumen in ml/g des Probenkörpers ist.

Die Dichte p des porösen Materials in der Einheit g/ml wurde gemäß der Formel ρ = 1 / (Vᵢ + Vₛ) berechnet. Als spezifisches Volumen wurde der Wert 1 / Vₛ = 1,38 g/ml verwendet. Dieser Wert lässt sich durch He-Pyknometrie bestimmen.

Es wurden folgende Verbindungen eingesetzt:
a1-1: oligomeres MDI (Lupranat® M200) mit einem NCO-Gehalt von 30,9 g pro 100 g nach ASTM D-5155-96 A, einer Funktionalität im Bereich von drei und einer Viskosität von 2100 mPa.s bei 25°C nach DIN 53018.
a1-2: oligomeres MDI (Lupranat® M50) mit einem NCO-Gehalt von 31,5 g pro 100 g nach ASTM D-5155-96 A, einer Funktionalität im Bereich von 2,8 bis 2,9 und einer Viskosität von 550 mPa.s bei 25°C nach DIN 53018.
a2-1: Tetraethyl-4,4'-diaminodiphenylmethan
a2-2: Tetraisopropyl-4,4'-diaminodiphenylmethan
a2-3: 3,3'-Diisopropyl-5,5'-dimethyl-4,4'-diaminodiphenylmethan
a2-4: 4,4'-Diaminodiphenylmethan

### Beispiel 1

1,6 g der Verbindung a1-1 wurden unter Rühren bei 20°C in 10,5 g Aceton in einem Becherglas gelöst. 1,6 g Tetraethyl-4,4'-diaminodiphenylmethan (a2-1) wurden in 11 g Aceton in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Das erhaltene Material hatte einen durchschnittlichen Porendurchmesser von 4 µm. Die Porosität betrug 89 Vol.-% mit einer entsprechenden Dichte von 135 g/l.

### Beispiel 2

1,6 g der Verbindung a1-2 wurden unter Rühren bei 20°C in 10,5 g Aceton in einem Becherglas gelöst. 1,6 g 3,3'-Diisopropyl-5,5'-dimethyl-4,4'-diaminodiphenylmethan (a2-3) wurden in 11 g Aceton in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Das erhaltene Material hatte ein Porenvolumen von 5,6 ml/g und einen durchschnittlichen Porendurchmesser von 3 µm. Die Porosität betrug 89 Vol.-% mit einer entsprechenden Dichte von 155 g/l.

### Beispiel 3

1,4 g der Verbindung a1-1 wurden unter Rühren bei 20°C in 10,5 g Aceton in einem Becherglas gelöst. 1,7 g Tetraisopropyl-4,4'-diaminodiphenylmethan (a2-2) wurden in 11 g Aceton in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Das erhaltene Material hatte ein Porenvolumen von 6,3 ml/g und einen durchschnittlichen Porendurchmesser von 2 µm. Die Porosität betrug 85 Vol.-% mit einer entsprechenden Dichte von 143 g/l.

### Beispiel 4

1,4 g der Verbindung a1-2 wurden unter Rühren bei 20°C in 10,5 g Aceton in einem Becherglas gelöst. 1,7 g Tetraisopropyl-4,4'-diaminodiphenylmethan (a2-2) wurden in 11 g Aceton in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Das erhaltene Material hatte ein Porenvolumen von 5,5 ml/g und einen durchschnittlichen Porendurchmesser von 1,5 µm. Die Porosität betrug 85 Vol.-% mit einer entsprechenden Dichte von 160 g/l.

### Beispiel 5V

1,9 g der Verbindung a1-1 wurden unter Rühren bei 20°C in 10,5 g Aceton in einem Becherglas gelöst. 1,3 g 4,4'-Diaminodiphenylmethan (a2-4) wurden in 11 g Aceton in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Das erhaltene Material hatte ein Porenvolumen von 5,1 ml/g und einen durchschnittlichen Porendurchmesser von 2,9 µm. Die Porosität betrug 87 Vol.-% mit einer entsprechenden Dichte von 170 g/l.

### Beispiel 6V

2 g der Verbindung a1-2 wurden unter Rühren bei 20°C in 10,5 g Aceton in einem Becherglas gelöst. 1,3 g 4,4'-Diaminodiphenylmethan (a2-4) wurden in 11 g Aceton in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Das erhaltene Material hatte ein Porenvolumen von 3,1 ml/g und einen durchschnittlichen Porendurchmesser von 1,5 µm. Die Porosität betrug 81 Vol.-% mit einer entsprechenden Dichte von 260 g/l.

Die Verwendung der erfindungsgemäßen substituierten mehrfunktionellen aromatischen Amine führt zu porösen Materialien, die insbesondere eine verringerte Dichte bei vergleichbarer Porosität aufweisen.

## Patentansprüche

1. Poröses Material enthaltend folgende Komponenten in umgesetzter Form:
(a1) mindestens ein mehrfunktionelles Isocyanat, und
(a2) mindestens ein mehrfunktionelles substituiertes aromatisches Amin (a2-s) gemäß der allgemeinen Formel I 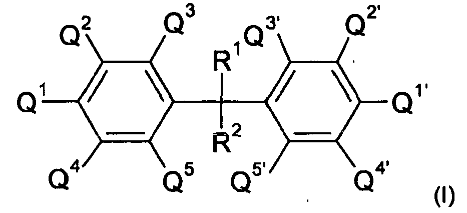 und optional mindestens ein weiteres mehrfunktionelles Amin, welches sich von den Aminen (a2-s) gemäß der allgemeinen Formel I unterscheidet, ausgewählt aus der Gruppe bestehend aus mehrfunktionellen aliphatischen Aminen (a2-a) und mehrfunktionellen aromatischen Aminen (a2-u),
wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass
- die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist und
- Q², Q⁴, Q^{2'} und Q^{4'} so gewählt werden, dass die Verbindung gemäß der allgemeinen Formel I mindestens eine lineare oder verzweigte Alkylgruppe, die weitere funktionelle Gruppen tragen kann, mit von 1 bis 12 Kohlenstoffatomen in α-Position zu mindestens einer an den aromatischen Kern gebundenen primären Aminogruppe aufweist.

2. Poröses Material nach Anspruch 1, wobei Q², Q⁴, Q^{2'} und Q^{4'} so gewählt werden, dass das substituierte aromatische Amin (a2-s) mindestens zwei primäre Aminogruppen umfasst, die jeweils eine lineare oder verzweigte Alkylgruppe mit von 1 bis 12 Kohlenstoffatomen in α-Position aufweisen, die weitere funktionelle Gruppen tragen kann.

3. Poröses Material nach Anspruch 1 oder 2, wobei die Aminkomponente (a2) mindestens eine Verbindung (a2-s) umfasst, die aus der Gruppe bestehend aus 3,3',5,5'-Tetraalkyl-4,4'-diaminodiphenylmethan, 3,3',5,5'-Tetraalkyl-2,2'-diaminodiphenylmethan und 3,3',5,5'-Tetraalkyl-2,4'-diaminodiphenylmethan ausgewählt wird, wobei die Alkylgruppen in 3,3',5 und 5'-Position gleich oder unterschiedlich sein können und unabhängig voneinander ausgewählt werden aus linearen oder verzweigten Alkylgruppen mit von 1 bis 12 Kohlenstoffatomen, wobei die Alkylgruppen weitere funktionelle Gruppen tragen können.

4. Poröses Material nach den Ansprüchen 1 bis 3, wobei die Alkylgruppen der mehrfunktionellen aromatischen Amine (a2-s) gemäß der allgemeinen Formel I ausgewählt werden aus Methyl, Ethyl, n-Propyl, iso-Propyl, n-Butyl, sek-Butyl und tert-Butyl.

5. Poröses Material nach den Ansprüchen 1 bis 4, wobei die mehrfunktionellen aromatischen Amine (a2-s) gemäß der allgemeinen Formel I 3,3',5,5'-Tetraalkyl-4,4'-diaminodiphenylmethane sind, vorzugsweise Tetraethyl-4,4'-diaminodiphenylmethan.

6. Poröses Material nach den Ansprüchen 1 bis 5, wobei Komponente (a2) weiterhin mindestens ein mehrfunktionelles aromatisches Amin (a2-u) ausgewählt aus 4,4'-Diaminodiphenylmethan, 2,4'-Diaminodiphenylmethan, 2,2'-Diaminodiphenylmethan und oligomerem Diaminodiphenylmethan umfasst.

7. Poröses Material nach den Ansprüchen 1 bis 6, enthaltend von 20 bis 80 Gew.-% der Isocyanatkomponente (a1) und von 20 bis 80 Gew.-% der Aminkomponente (a2) jeweils in umgesetzter Form, wobei die Summe der Gew.-% der Komponenten (a1) und (a2) 100 Gew.-% ergibt.

8. Poröses Material nach den Ansprüchen 1 bis 7, wobei die Monomerkomponente (a1) aus mindestens einem mehrfunktionellen Isocyanat ausgewählt aus Diphenylmethan-4,4'-diisocyanat, Diphenylmethan-2,4'-diisocyanat, Diphenylmethan-2,2'-diiso-cyanat und oligomerem Diphenylmethandiisocyanat besteht.

9. Poröses Material nach den Ansprüchen 1 bis 8, wobei der volumengewichtete mittlere Porendurchmesser des Xerogels höchstens 5 Mikrometer beträgt.

10. Verfahren zur Herstellung von poröses Materialien gemäß den Ansprüchen 1 bis 9, umfassend:
(a) Bereitstellen der Komponente (a1) und getrennt davon der Komponente (a2) wie in den Ansprüchen 1 bis 9 definiert jeweils in einem Lösungsmittel (C),
(b) Umsetzung der Komponenten (a1) und (a2) in Gegenwart des Lösungsmittels (C) zu einem Gel, und
(c) Trocknen des im vorigen Schritt erhaltenen Gels.

11. Verfahren nach Anspruch 10, wobei das Trocknen des erhaltenen Gels durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit erfolgt.

12. Verfahren nach Anspruch 10, wobei das Trocknen des erhaltenen Gels unter überkritischen Bedingungen erfolgt.

13. Poröses Material erhältlich gemäß den Ansprüchen 10 bis 12.

14. Verwendung von porösen Materialien gemäß den Ansprüchen 1 bis 9 oder von porösen Materialien gemäß Anspruch 13 als Dämmstoff.

15. Verwendung von porösen Materialien gemäß den Ansprüchen 1 bis 9 oder von porösen Materialien gemäß Anspruch 13 für Vakuumisolationspaneele.

## Claims

1. A porous material comprising the following components in reacted form:
(a1) at least one polyfunctional isocyanate and
(a2) at least one polyfunctional substituted aromatic amine (a2-s) of the general formula I 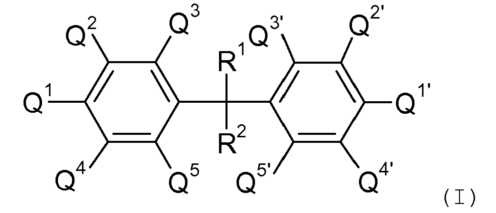 and optionally at least one further polyfunctional amine which is different from the amines (a2-s) of the general formula I and is selected from the group consisting of polyfunctional aliphatic amines (a2-a) and polyfunctional aromatic amines (a2-u),
where R¹ and R² can be identical or different and are selected independently from among hydrogen and linear or branched alkyl groups having from 1 to 6 carbon atoms and all substituents Q¹ to Q⁵ and Q^{1'} to Q^{5'} can be identical or different and are selected independently from among hydrogen, a primary amino group and a linear or branched alkyl group having from 1 to 12 carbon atoms, where the alkyl group can bear further functional groups, with the proviso that
- the compound of the general formula I comprises at least two primary amino groups, where at least one of Q¹, Q³ and Q⁵ is a primary amino group and at least one of Q^{1'}, Q^{3'} and Q^{5'} is a primary amino group and
- Q², Q⁴, Q^{2'} and Q^{4'} are selected so that the compound of the general formula I has at least one linear or branched alkyl group which can optionally bear further functional groups and has from 1 to 12 carbon atoms in the α position to at least one primary amino group bound to the aromatic ring.

2. The porous material according to claim 1, wherein Q², Q⁴, Q^{2'} and Q^{4'} are selected so that the substituted aromatic amine (a2-s) comprises at least two primary amino group which each have a linear or branched alkyl group having from 1 to 12 carbon atoms in the α position, where the alkyl group can bear further functional groups.

3. The porous material according to claim 1 or 2, wherein the amine component (a2) comprises at least one compound (a2-s) selected from the group consisting of 3,3',5,5'-tetraalkyl-4,4'-diaminodiphenylmethane, 3,3',5,5'-tetraalkyl-2,2'-diaminodiphenylmethane and 3,3',5,5'-tetraalkyl-2,4'-diaminodiphenylmethane, where the alkyl groups in the 3, 3', 5 and 5' positions can be identical or different and are selected independently from among linear or branched alkyl groups which have from 1 to 12 carbon atoms and can bear further functional groups.

4. The porous material according to any of claims 1 to 3, wherein the alkyl groups of the polyfunctional aromatic amines (a2-s) of the general formula I are selected from among methyl, ethyl, n-propyl, isopropyl, n-butyl, sec-butyl and tert-butyl.

5. The porous material according to any of claims 1 to 4, wherein the polyfunctional aromatic amines (a2-s) of the general formula I are 3,3',5,5'-tetraalkyl-4,4'-diaminodiphenylmethanes , preferably tetraethyl-4,4'-diaminodiphenylmethane.

6. The porous material according to any of claims 1 to 5, wherein component (a2) further comprises at least one polyfunctional aromatic amine (a2-u) selected from among 4,4'-diaminodiphenylmethane, 2,4'-diaminodiphenylmethane, 2,2'-diaminodiphenylmethane and oligomeric diaminodiphenylmethane.

7. The porous material according to any of claims 1 to 6 which comprises from 20 to 80% by weight of the isocyanate component (a1) and from 20 to 80% by weight of the amine component (a2), in each case in reacted form, with the sum of the % by weight of the components (a1) and (a2) being 100% by weight.

8. The porous material according to any of claims 1 to 7, wherein the monomer component (a1) comprises at least one polyfunctional isocyanate selected from among diphenylmethane 4,4'-diisocyanate, diphenylmethane 2,4'-diisocyanate, diphenylmethane 2,2'-diisocyanate and oligomeric diphenylmethane diisocyanate.

9. The porous material according to any of claims 1 to 8, wherein the volume-weighted average pore diameter of the xerogel is not more than 5 microns.

10. A process for producing porous materials according to any of claims 1 to 9, which comprises:
(a) provision of the component (a1) and, separately therefrom, the component (a2) as defined in any of claims 1 to 9, in each case in a solvent (C);
(b) reaction of the components (a1) and (a2) in the presence of the solvent (C) to form a gel and
(c) drying of the gel obtained in the preceding step.

11. The process according to claim 10, wherein the drying of the gel obtained is carried out by converting the liquid comprised in the gel into the gaseous state at a temperature and a pressure below the critical temperature and the critical pressure of the liquid comprised in the gel.

12. The process according to claim 10, wherein the drying of the gel obtained is carried out under supercritical conditions.

13. A porous material which can be obtained according to any of claims 10 to 12.

14. The use of porous materials according to any of claims 1 to 9 or of porous materials according to claim 13 as insulation material.

15. The use of porous materials according to any of claims 1 to 9 or of porous materials according to claim 13 for vacuum insulation panels.

## Revendications

1. Matériau poreux contenant les composants suivants sous forme transformée :
(a1) au moins un isocyanate polyfonctionnel, et
(a2) au moins une amine aromatique polyfonctionnelle, substituée (a2-s) selon la formule générale I 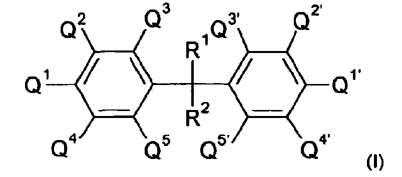 et éventuellement au moins une autre amine polyfonctionnelle, qui se distingue des amines (a2-s) selon la formule générale I, choisie dans le groupe constitué par les amines aliphatiques polyfonctionnelles (a2-a) et les amines aromatiques polyfonctionnelles (a2-u),
R¹ et R² pouvant être identiques ou différents et étant choisis, indépendamment l'un de l'autre, parmi hydrogène et les groupes alkyle linéaires ou ramifiés comprenant 1 à 6 atomes de carbone et l'ensemble des substituants Q¹ à Q⁵ et Q^{1'} à Q^{5'} étant identiques ou différents et choisis, indépendamment les uns des autres, parmi hydrogène, un groupe amino primaire et un groupe alkyle linéaire ou ramifié comprenant 1 à 12 atomes de carbone, le groupe alkyle pouvant porter d'autres groupes fonctionnels, sous réserve que
- le composé selon la formule générale I comprend au moins deux groupes amino primaires, au moins l'un parmi Q¹, Q³ et Q⁵ étant un groupe amino primaire et au moins l'un parmi Q^{1'}, Q^{3'} et Q^{5'} étant un groupe amino primaire et
- Q² Q⁴, Q^{2'} et Q^{4'} sont choisis de manière telle que le composé selon la formule générale I présente au moins un groupe alkyle linéaire ou ramifié, qui peut porter d'autres groupes fonctionnels, comprenant 1 à 12 atomes de carbone en position α par rapport à au moins un groupe amino primaire lié au noyau aromatique.

2. Matériau poreux selon la revendication 1, Q², Q⁴, Q^{2'} et Q^{4'} étant choisis de manière telle que l'amine aromatique substituée (a2-s) comprend au moins deux groupes amino primaires, qui présentent à chaque fois un groupe alkyle linéaire ou ramifié comprenant 1 à 12 atomes de carbone en position α, qui peut porter d'autres groupes fonctionnels.

3. Matériau poreux selon la revendication 1 ou 2, le composant amine (a2) comprenant au moins un composé (a2-s), qui est choisi dans le groupe constitué par le 3,3',5,5'-tétraalkyl-4,4'-diaminodiphénylméthane, le 3,3',5,5'-tétraalkyl-2,2'-diaminodiphénylméthane et le 3,3',5,5'-tétraalkyl-2,4'-diaminodiphénylméthane, les groupes alkyle en position 3, 3', 5 et 5' pouvant être identiques ou différents et étant choisis indépendamment les uns des autres parmi les groupes alkyle linéaires ou ramifiés comprenant 1 à 12 atomes de carbone, les groupes alkyle pouvant porter d'autres groupes fonctionnels.

4. Matériau poreux selon les revendications 1 à 3, les groupes alkyle des amines aromatiques polyfonctionnelles (a2-s) selon la formule générale I étant choisis parmi méthyle, éthyle, n-propyle, isopropyle, n-butyle, sec-butyle et tert-butyle.

5. Matériau poreux selon les revendications 1 à 4, les amines aromatiques polyfonctionnelles (a2-s) selon la formule générale I étant des 3,3',5,5'-tétraalkyl-4,4'-diaminodiphénylméthanes, de préférence le tétraéthyl-4,4'-diaminodiphénylméthane.

6. Matériau poreux selon les revendications 1 à 5, le composant (a2) comprenant en outre au moins une amine aromatique polyfonctionnelle (a2-u) choisie parmi le 4,4'-diaminodiphénylméthane, le 2,4'-diaminodiphénylméthane, le 2,2'-diaminodiphénylméthane et le diaminodiphénylméthane oligomère.

7. Matériau poreux selon les revendications 1 à 6, contenant 20 à 80% en poids du composant isocyanate (a1) et 20 à 80% en poids du composant amine (a2) à chaque fois sous forme transformée, la somme des % en poids des composants (a1) et (a2) valant 100% en poids.

8. Matériau poreux selon les revendications 1 à 7, le composant monomère (a1) étant constitué par au moins un isocyanate polyfonctionnel choisi parmi le diphénylméthane-4,4'-diisocyanate, le diphénylméthane-2,4'-diisocyanate, le diphénylméthane-2,2'-diisocyanate et le diphénylméthanediisocyanate oligomère.

9. Matériau poreux selon les revendications 1 à 8, le diamètre moyen des pores, pondéré en volume, du xérogel étant d'au plus 5 µm.

10. Procédé pour la préparation de matériaux poreux selon les revendications 1 à 9, comprenant :
(a) la mise à disposition du composant (a1) et, séparément de celui-ci, du composant (a2), tels que définis dans les revendications 1 à 9, à chaque fois dans un solvant (C) ;
(b) la transformation des composants (a1) et (a2) en présence du solvant (C) en un gel, et
(c) le séchage du gel obtenu dans l'étape précédente.

11. Procédé selon la revendication 10, le séchage du gel obtenu étant réalisé par transformation du liquide contenu dans le gel à l'état gazeux à une température et une pression inférieures à la température critique et à la pression critique du liquide contenu dans le gel.

12. Procédé selon la revendication 10, le séchage du gel obtenu ayant lieu dans des conditions surcritiques.

13. Matériau poreux pouvant être obtenu selon les revendications 10 à 12.

14. Utilisation de matériaux poreux selon les revendications 1 à 9 ou de matériaux poreux selon la revendication 13 comme isolant.

15. Utilisation de matériaux poreux selon les revendications 1 à 9 ou de matériaux poreux selon la revendication 13 pour des panneaux d'isolation sous vide.
